# EUROPÄISCHE PATENTSCHRIFT

(11) **EP 4 117 934 B1**
(45) Veröffentlichungstag und Bekanntmachung des Hinweises auf die Patenterteilung: **21.05.2025**
(21) Anmeldenummer: 21708110.8
(22) Anmeldetag: 12.02.2021
(51) Int. Cl.: B60B 27/00

(54) **RADLAGERANORDNUNG FÜR EIN FAHRZEUG**
WHEEL BEARING ASSEMBLY FOR A VEHICLE
ENSEMBLE ROULEMENT DE ROUE POUR VEHICULE

(30) Priorität: 09.03.2020 DE 102020106274
(43) Veröffentlichungstag der Anmeldung: 18.01.2023
(73) Patentinhaber: Schaeffler Technologies AG & Co. KG, 91074 Herzogenaurach (DE)
(72) Erfinder: STAHL, Matthias, 97422 Schweinfurt (DE); EICHELMANN, Frank, 97499 Donnersdorf (DE); TOMASEC, Peter, 013 32 Dlhé Pole (SK); DLUGAI, Darius, 97525 Schwebheim (DE)
(86) Internationale Anmeldenummer: PCT/DE2021/100138
(87) Internationale Veröffentlichungsnummer: WO 2021/180266

(56) Entgegenhaltungen:
- WO-A1-2011/152497
- DE-A1- 102012 216 598
- DE-T2- 69 610 657
- DE-T5- 112008 001 445
- US-A1- 2011 077 089

## Beschreibung

Die vorliegende Erfindung betrifft eine Radlageranordnung für ein Fahrzeug, ein Fahrzeug mit einer solchen Radlageranordnung und die Verwendung einer solchen Radlageranordnung in einem Fahrzeug.

Radlageranordnungen für Fahrzeuge sind im Stand der Technik bekannt.

Beispielsweise beschreibt die DE 11 2008 001 445 T5 eine solche Radlageranordnung für ein Fahrzeug. Dabei hat sich herausgestellt, dass bei bekannten Radlageranordnungen Klickgeräusche auftreten können, wobei diese insbesondere bei Lastwechsel auftreten können. Zur Reduzierung solcher Klickgeräusche offenbart die DE 11 2008 001 445 T5, dass eine Kappe zwischen einer Radnabe und einem Gelenkelement angeordnet werden kann. Allerdings hat sich herausgestellt, dass bei dieser vorgeschlagenen Lösung das benachbart angeordnete Encoder-Element beeinträchtigt, und somit das ABS-Signal gestört werden kann.

Eine weitere Radlageranordnung ist aus DE 10 2012 216598 A1 bekannt.

Vor diesem Hintergrund ist es eine Aufgabe der vorliegenden Erfindung, eine verbesserte Radlageranordnung bereitzustellen, bei der eine Geräuschentwicklung bei Lastwechsel vermieden bzw. vermindert werden kann und zudem eine Beeinträchtigung des Encoder-Elements verhindert werden kann.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

Eine erfindungsgemäße Radlageranordnung für ein Fahrzeug, umfasst: eine Radnabe mit einem Wälznietbundabschnitt; eine Lageranordnung mit einem Innenringelement und einem Außenringelement, wobei zwischen dem Innenringelement und dem Außenringelement zumindest ein Wälzkörper gelagert ist; ein Washerelement, das am Innendurchmesser des Wälznietbundabschnitts und/oder am Außendurchmesser des Innenringelements der Lageranordnung angeordnet ist. Weiterhin ist das Washerelement am Innendurchmesser des Wälznietbundabschnitts mittels einer Presspassung und/oder am Innendurchmesser des Wälznietbundabschnitts mittels Magnetisieren des Washerelements angeordnet.

Der vorliegenden Erfindung liegt die Erkenntnis zugrunde, dass die an der Radlageranordnung auftretenden Klickgeräusche durch eine Relativbewegung der Bauteile erzeugt wird, die zur Drehmomentübertragung vorgesehen sind. Insbesondere tritt eine solche Relativbewegung in der Praxis an der Gelenkglocke des Gleichlaufgelenks und am Wälznietbundabschnitt der Radnabe auf. Dabei wurde ferner festgestellt, dass die Geräuschentwicklung bei Fahrzeugen mit einem elektrischen Antrieb noch größer ist, insbesondere, wenn diese Fahrzeuge in einem Rekuperationsmodus betrieben werden können.

Darüber hinaus liegt der vorliegenden Erfindung die Erkenntnis zugrunde, dass bei der in der DE 11 2008 001 445 T5 vorgeschlagenen Lösung zur Reduzierung der Geräuschentwicklung eine Störung bzw. Beeinträchtigung des ABS-Signals dadurch hervorgerufen wird, dass durch die dort vorgeschlagene Anordnung der Kappe mittels einer Nase am Außendurchmesser des Wälznietbundes, insbesondere bei der Montage, häufig metallische Späne/Partikel abgerieben werden, da der Wälznietbundabschnitt vergleichsweise weich ausgebildet ist und für eine sichere Befestigung der Kappe eine Überdeckung bereitgestellt werden muss. Diese metallischen Späne werden anschließend vom angrenzend angeordneten magnetischen Encoder-Element gesammelt werden, und dadurch eine Störung des ABS-Signals hervorrufen. Mit der vorliegend vorgeschlagenen Anordnung des Washerelements kann eine solche Ansammlung von Spänen am magnetischen Encoder-Element vermieden bzw. erheblich reduziert werden. Denn durch die vorliegende Lösung kann eine Bildung von Spänen bei der Montage verhindert bzw. erheblich reduziert werden bzw. befinden sich möglicherweise anfallende Späne im Bereich der Lagermittelachse (Gelenkglocke) und somit nicht im Bereich des Encoder-Elements.

Der Begriff des Washerelement ist vorliegend breit zu verstehen und umfasst alle Dämpfungsscheiben, Druckscheiben, Unterlegscheiben und dergleichen, die zur Anordnung am Innendurchmesser des Wälznietbundabschnitts und/oder am Außendurchmesser des Innenringelements der Lageranordnung geeignet sind.

Vorzugsweise umfasst das Washerelement zumindest einen Nasenabschnitt und mit diesem am Innendurchmesser des Wälznietbundabschnitts mittels Presspassung angeordnet ist, wobei der Nasenabschnitt in Teilbereichen am Umfang des Washerelements oder durchgehend am Umfang des Washerelements vorgesehen ist.

Vorteilhafterweise ist das Washerelement am Innendurchmesser des Wälznietbundabschnitts mittels Presspassung und einer Klebeschicht angeordnet.

Vorzugsweise ist das Washerelement am Innendurchmesser des Wälznietbundes mittels zumindest eines Rast- oder Schnappnasenelements angeordnet, wobei das Rast- oder Schnappnasenelement vorzugsweise in eine am Innendurchmesser des Wälznietbundabschnitts korrespondierend ausgebildete Nut angeordnet ist und wobei das Rast- oder Schnappnasenelement und die korrespondierend ausgebildete Nut in Teilbereichen am Umfang des Washerelements oder durchgehend am Umfang des Washerelements vorgesehen ist, wobei im Eingriffsbereich des Washerelements und des Innendurchmessers des Wälznietbundabschnitts die jeweiligen Oberflächen des Washerelements und/oder des Innendurchmessers des Wälznietbundabschnitts vorzugsweise angeraut ausgebildet sind, wobei die jeweiligen Oberflächen des Washerelements und/oder des Innendurchmessers des Wälznietbundabschnitts in Teilbereichen an ihren jeweiligen Umfang oder durchgehend über ihren jeweiligen Umfang vorgesehen sind.

Ferner ist es von Vorteil, dass das Washerelement am Innendurchmesser des Wälznietbundabschnitts mittels zumindest eines O-Ringelements angeordnet ist, wobei am Innendurchmesser des Wälznietbundabschnitts vorzugsweise eine Nut ausgebildet ist, in die das zumindest eine O-Ringelement angeordnet ist.

Vorzugsweise umfasst das Washerelement zumindest eine gummierte Oberfläche und/oder eine Eingriffsstruktur aus einem Gummimaterial umfasst und mit dieser gummierten Oberfläche und/oder Eingriffsstruktur am Innendurchmesser des Wälznietbundabschnitts oder am Außendurchmesser des Wälznietbundabschnitts in Eingriff steht, wobei die gummierte Oberfläche und/oder die Eingriffsstruktur vorzugsweise zumindest eine Oberflächenstruktur umfasst, vorzugsweise zumindest eine Spitzenstruktur, eine Wellenstruktur oder eine Nasenstruktur.

Eine weitere erfindungsgemäße Radlageranordnung für ein Fahrzeug umfasst: eine Radnabe mit einem Wälznietbundabschnitt; eine Lageranordnung mit einem Innenringelement und einem Außenringelement, wobei zwischen dem Innenringelement und dem Außenringelement zumindest ein Wälzkörper gelagert ist; ein Washerelement, das am Innendurchmesser des Wälznietbundabschnitts und/oder am Außendurchmesser des Innenringelements der Lageranordnung angeordnet ist und wobei das Washerelement am Außendurchmesser des Innenringelements der Lageranordnung mittels Presspassung angeordnet ist, wobei das Washerelement vorzugsweise mit einem Encoder-Element der Radlageranordnung angeordnet bzw. kombiniert ist.

Die Erfindung betrifft weiterhin eine Radlageranordnung für ein Fahrzeug, umfassend: eine Radnabe mit einem Wälznietbundabschnitt; eine Lageranordnung mit einem Innenringelement und einem Außenringelement, wobei zwischen dem Innenringelement und dem Außenringelement zumindest ein Wälzkörper gelagert ist; ein Washerelement, das am Innendurchmesser des Wälznietbundabschnitts und/oder am Außendurchmesser des Innenringelements der Lageranordnung angeordnet ist und wobei das Washerelement am Innendurchmesser des Wälznietbundes mittels zumindest eines Nasenelements angeordnet ist, wobei das Nasenelement vorzugsweise in eine am Innendurchmesser des Wälznietbundabschnitts korrespondierend ausgebildete Nut angeordnet ist, und wobei das Nasenelement und die korrespondierend ausgebildete Nut in Teilbereichen am Umfang des Washerelements oder auch durchgehend am Umfang des Washerelements vorgesehen ist.

Darüber hinaus betrifft die vorliegende Erfindung eine Verwendung einer oben beschriebenen Radlageranordnung in einem Fahrzeug, vorzugsweise in einem elektrisch angetriebenen Fahrzeug.

Die vorliegende Erfindung betrifft ferner ein Fahrzeug, insbesondere ein elektrisch angetriebenes Fahrzeug, das vorzugsweise in einem Rekuperationsmodus betreibbar ist, umfassend zumindest eine oben beschriebene Radlageranordnung.

Weitere Merkmale, Vorteile und Anwendungsmöglichkeiten der vorliegenden Erfindung ergeben sich aus der nachfolgenden Beschreibung, dem Ausführungsbeispiel und den Figuren. Darin zeigt:
- **Figur 1**: einen Ausschnitt einer ersten bevorzugten Ausführungsform einer erfindungsgemäßen Radlageranordnung;
- **Figur 2**: einen Ausschnitt einer zweiten bevorzugten Ausführungsform einer erfindungsgemäßen Radlageranordnung;
- **Figur 3**: einen Ausschnitt einer dritten bevorzugten Ausführungsform einer erfindungsgemäßen Radlageranordnung;
- **Figur 4**: einen Ausschnitt einer vierten bevorzugten Ausführungsform einer erfindungsgemäßen Radlageranordnung;
- **Figur 5**: einen Ausschnitt einer fünften bevorzugten Ausführungsform einer erfindungsgemäßen Radlageranordnung;
- **Figur 6**: einen Ausschnitt einer sechsten bevorzugten Ausführungsform einer erfindungsgemäßen Radlageranordnung;
- **Figur 7**: einen Ausschnitt einer siebten bevorzugten Ausführungsform einer erfindungsgemäßen Radlageranordnung;
- **Figur 8**: einen Ausschnitt einer achten bevorzugten Ausführungsform einer erfindungsgemäßen Radlageranordnung;
- **Figur 9**: einen Ausschnitt einer neunten bevorzugten Ausführungsform einer erfindungsgemäßen Radlageranordnung;
- **Figur 10**: einen Ausschnitt einer zehnten bevorzugten Ausführungsform einer erfindungsgemäßen Radlageranordnung;
- **Figur 11**: einen Ausschnitt einer elften bevorzugten Ausführungsform einer erfindungsgemäßen Radlageranordnung;
- **Figur 12**: einen Ausschnitt einer zwölften bevorzugten Ausführungsform einer erfindungsgemäßen Radlageranordnung;
- **Figur 13**: einen Ausschnitt einer dreizehnten bevorzugten Ausführungsform einer erfindungsgemäßen Radlageranordnung; und
- **Figur 14**: einen Ausschnitt einer vierzehnten bevorzugten Ausführungsform einer erfindungsgemäßen Radlageranordnung.

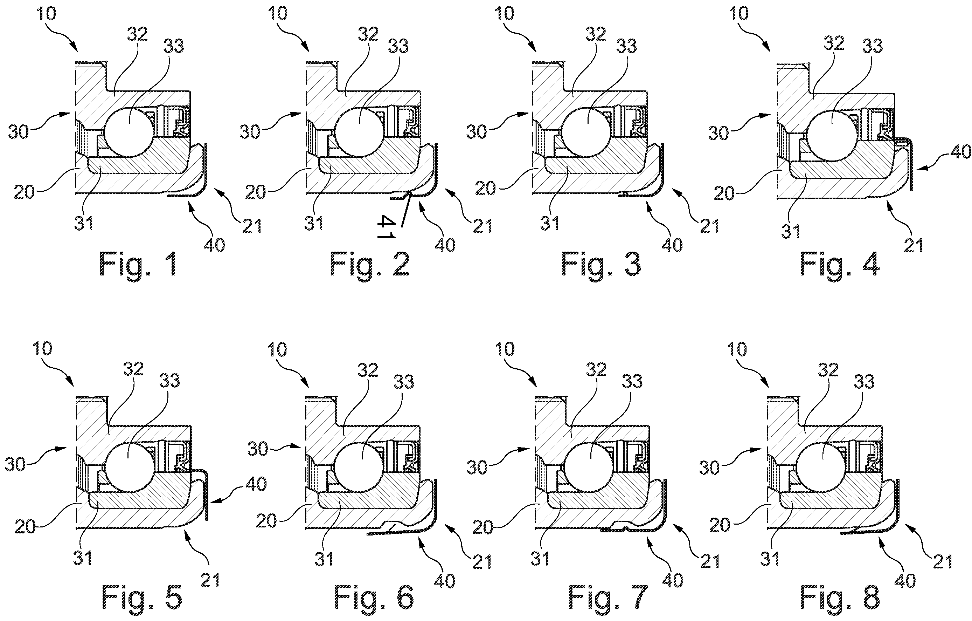

Der allgemeine Aufbau von Radlageranordnungen für Fahrzeuge ist dem Fachmann bekannt. Insbesondere wird hinsichtlich des allgemeinen Aufbaus einer Radlageranordnung auf die Druckschrift DE 11 2008 001 445 T5 verwiesen, die den Aufbau einer Radlageranordnung beschreibt. Dabei wird insbesondere auf den in Figur 5 gezeigten Aufbau der Radlagereinheit der Druckschrift DE 11 2008 001 445 T5 verwiesen, der den nachfolgenden Erläuterungen zugrunde gelegt wird.

In den Figuren ist jeweils ein Ausschnitt im Bereich einer eines Wälznietbundabschnitts 21 einer Radlageranordnung 10 gezeigt. Die gezeigten Radlageranordnungen 10 sind grundsätzlich gleich aufgebaut und unterscheiden sich lediglich hinsichtlich der Anordnung eines Washerelements 40.

Wie in den Figuren gezeigt, umfasst eine Radlagereinheit 10, eine Radnabe 20 zur Anordnung eines Rads (nicht gezeigt), einen Wälznietbundabschnitt 21, eine Lageranordnung 30, wobei die Lageranordnung 30 ein Innenringelement 31, ein Außenringelement 32 und zumindest einem Wälzkörper 33 umfasst.
Figur 1 zeigt eine erste bevorzugten Ausführungsform einer erfindungsgemäßen Radlageranordnung 10, bei der das Washerelement 40 am Innendurchmesser des Wälznietbundabschnitts 21 mittels Presspassung oder am Innendurchmesser des Wälznietbundabschnitts 21 mittels magnetisieren des Washerelements 40 angeordnet ist.
Figur 2 zeigt eine zweite bevorzugten Ausführungsform einer erfindungsgemäßen Radlageranordnung, bei der das Washerelement 40 zumindest einen Nasenabschnitt umfasst und mit diesem am Innendurchmesser des Wälznietbundabschnitts 21 mittels Presspassung angeordnet ist, wobei der Nasenabschnitt 41 dabei in Teilbereichen am Umfang des Washerelements 40 oder auch durchgehend am Umfang des Washerelements 40 vorgesehen sein kann.

Figur 3 zeigt eine dritte bevorzugten Ausführungsform einer erfindungsgemäßen Radlageranordnung, bei der das Washerelement 40 am Innendurchmesser des Wälznietbundabschnitts 21 mittels Presspassung und einer Klebeschicht angeordnet ist.
Figur 4 zeigt eine vierte bevorzugten Ausführungsform einer erfindungsgemäßen Radlageranordnung 10, bei der das Washerelement 40 am Außendurchmesser des Innenringelements 31 der Lageranordnung 30 mittels Presspassung angeordnet ist.
Figur 5 zeigt eine fünfte bevorzugten Ausführungsform einer erfindungsgemäßen Radlageranordnung 10, bei der das Washerelement 40 am Außendurchmesser des Innenringelements 31 der Lageranordnung 30 mittels Presspassung angeordnet ist, wobei das Washerelement 40 mit einem Encoder-Element der Radlageranordnung 10 angeordnet bzw. kombiniert ist.
Figur 6 zeigt eine sechste bevorzugten Ausführungsform einer erfindungsgemäßen Radlageranordnung 10, bei der das Washerelement 40 am Innendurchmesser des Wälznietbundes 21 mittels zumindest eines Rast- oder Schnappnasenelements angeordnet ist, wobei das Rast- oder Schnappnasenelement vorzugsweise in eine am Innendurchmesser des Wälznietbundabschnitts 21 korrespondierend ausgebildete Nut angeordnet ist, und wobei das Rast- oder Schnappnasenelement und die korrespondierend ausgebildete Nut in Teilbereichen am Umfang des Washerelements 40 oder auch durchgehend am Umfang des Washerelements 40 vorgesehen sein kann.
Figur 7 zeigt eine siebte bevorzugten Ausführungsform einer erfindungsgemäßen Radlageranordnung 10, bei der das Washerelement 40 am Innendurchmesser des Wälznietbundabschnitts 21 mittels zumindest eines Nasenelements angeordnet ist, wobei das Nasenelement vorzugsweise in eine am Innendurchmesser des Wälznietbundabschnitts 21 korrespondierend ausgebildete Nut angeordnet ist und wobei das Nasenelement und die korrespondierend ausgebildete Nut in Teilbereichen am Umfang des Washerelements 40 oder auch durchgehend am Umfang des Washerelements 40 vorgesehen sein kann.
Figur 8 zeigt eine achte bevorzugten Ausführungsform einer erfindungsgemäßen Radlageranordnung 10, bei der am Innendurchmesser des Wälznietbundabschnitts 40 eine aufgeraute Oberfläche vorgesehen ist, an der ein eine Schnappnase eingreifen kann. Eine solche Verbindung kann dabei wiederum in Teilbereichen am Umfang des Washerelements 40 oder auch durchgehend am Umfang des Washerelements 40 vorgesehen sein.

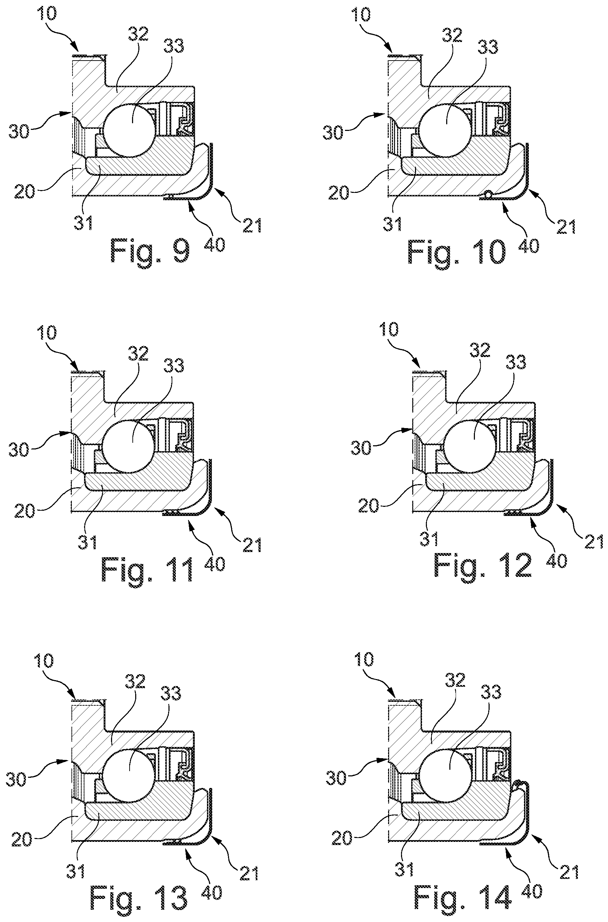

Figur 9 zeigt eine neunte bevorzugten Ausführungsform einer erfindungsgemäßen Radlageranordnung 10, bei der das Washerelement 40 am Innendurchmesser des Wälznietbundabschnitts 21 mittels zumindest eines O-Ringelements angeordnet ist.
Figur 10 zeigt eine zehnte bevorzugten Ausführungsform einer erfindungsgemäßen Radlageranordnung 10, bei der das Washerelement 40 wiederum am Innendurchmesser des Wälznietbundabschnitts 21 mittels zumindest eines O-

Ringelements angeordnet ist, wobei im Unterschied zum in Figur 9 gezeigten Ausführungsbeispiel am Innendurchmesser des Wälznietbundabschnitts 21 eine Nut ausgebildet ist, in die das zumindest eine O-Ringelement angeordnet ist.

Die Figuren 11 bis 13 zeigen drei weitere bevorzugte Ausführungsformen einer erfindungsgemäßen Radlageranordnung 10, bei der das Washerelement 40 zumindest eine gummierte Oberfläche und/oder eine Eingriffsstruktur aus einem Gummimaterial umfasst und mit dieser gummierten Oberfläche und/oder Eingriffsstruktur am Innendurchmesser des Wälznietbundabschnitts 21

Figur 14 zeigt eine vierzehnte bevorzugten Ausführungsform einer erfindungsgemäßen Radlageranordnung 10, bei der das Washerelement 40 zumindest eine gummierte Oberfläche und/oder eine Eingriffsstruktur aus einem Gummimaterial umfasst und mit dieser gummierten Oberfläche und/oder Eingriffsstruktur am Außendurchmesser des Wälznietbundabschnitts 21 in Eingriff steht.

Die vorliegende Erfindung ist dabei allerdings nicht auf das vorhergehend bevorzugte Ausführungsbeispiel beschränkt, solange sie vom Gegenstand der folgenden Ansprüche umfasst ist. Insbesondere können die in den Figuren 5 bis 7 gezeigten Sensoren/Einrichtungen beliebig miteinander kombiniert werden, wobei insbesondere mehrere der Sensoren/Einrichtungen eine erfindungsgemäße Messeinrichtung bilden können, wobei die Sensoren/Einrichtungen auch an unterschiedlichen Positionen am bzw. im ersten Wälzlager 42 und/oder am bzw. im zweiten Wälzlager 44 angeordnet sind.

### Bezugszeichenliste:

- 10: Radlageranordnung
- 20: Radnabe
- 21: Wälznietbundabschnitt
- 30: Lageranordnung
- 31: Innenringelement
- 32: Außenringelement
- 33: Wälzkörper
- 40: Washerelement

## Patentansprüche

1. Radlageranordnung (10) für ein Fahrzeug, umfassend:
eine Radnabe (20) mit einem Wälznietbundabschnitt (21);
eine Lageranordnung (30) mit einem Innenringelement (31) und einem Außenringelement (32), wobei zwischen dem Innenringelement (31) und dem Außenringelement (32) zumindest ein Wälzkörper (33) gelagert ist;
ein Washerelement (40), **dadurch gekennzeichnet, dass** das Washerelement am Innendurchmesser des Wälznietbundabschnitts (21) und/oder am Außendurchmesser des Innenringelements (31) der Lageranordnung (30) angeordnet ist und wobei das Washerelement (40) am Innendurchmesser des Wälznietbundabschnitts (21) mittels Presspassung und/oder am Innendurchmesser des Wälznietbundabschnitts (21) mittels Magnetisieren des Washerelements (40) angeordnet ist.

2. Radlageranordnung (10) nach Anspruch 1, wobei das Washerelement (40) zumindest einen Nasenabschnitt (41) umfasst und mit diesem am Innendurchmesser des Wälznietbundabschnitts (21) mittels Presspassung angeordnet ist, wobei der Nasenabschnitt (41) in Teilbereichen am Umfang des Washerelements (40) oder durchgehend am Umfang des Washerelements (40) vorgesehen ist.

3. Radlageranordnung (10) nach einem der vorhergehen Ansprüche, wobei das Washerelement (40) am Innendurchmesser des Wälznietbundabschnitts (21) mittels Presspassung und einer Klebeschicht angeordnet ist.

4. Radlageranordnung (10) nach einem der vorhergehen Ansprüche, wobei das Washerelement (40) am Innendurchmesser des Wälznietbundes mittels zumindest eines Rast- oder Schnappnasenelements angeordnet ist, wobei das Rast- oder Schnappnasenelement vorzugsweise in eine am Innendurchmesser des Wälznietbundabschnitts (21) korrespondierend ausgebildete Nut angeordnet ist und wobei das Rast- oder Schnappnasenelement und die korrespondierend ausgebildete Nut in Teilbereichen am Umfang des Washerelements (40) oder durchgehend am Umfang des Washerelements (40) vorgesehen ist, wobei im Eingriffsbereich des Washerelements (40) und des Innendurchmessers des Wälznietbundabschnitts (21) die jeweiligen Oberflächen des Washerelements (40) und/oder des Innendurchmessers des Wälznietbundabschnitts (21) vorzugsweise angeraute ausgebildet sind, wobei die jeweiligen Oberflächen des Washerelements (40) und/oder des Innendurchmessers des Wälznietbundabschnitts (21) in Teilbereichen an ihren jeweiligen Umfang oder durchgehend über ihren jeweiligen Umfang vorgesehen sind.

5. Radlageranordnung (10) nach einem der vorhergehen Ansprüche, wobei das Washerelement (40) am Innendurchmesser des Wälznietbundabschnitts (21) mittels zumindest eines O-Ringelements angeordnet ist, wobei am Innendurchmesser des Wälznietbundabschnitts (21) vorzugsweise eine Nut ausgebildet ist, in die das zumindest eine O-Ringelement angeordnet ist.

6. Radlageranordnung (10) nach einem der vorhergehen Ansprüche, wobei das Washerelement (40) zumindest eine gummierte Oberfläche und/oder eine Eingriffsstruktur aus einem Gummimaterial umfasst und mit dieser gummierten Oberfläche und/oder Eingriffsstruktur am Innendurchmesser des Wälznietbundabschnitts (21) oder am Außendurchmesser des Wälznietbundabschnitts (21) in Eingriff steht, wobei die gummierte Oberfläche und/oder die Eingriffsstruktur vorzugsweise zumindest eine Oberflächenstruktur umfasst, vorzugsweise zumindest eine Spitzenstruktur, eine Wellenstruktur oder eine Nasenstruktur.

7. Radlageranordnung (10) für ein Fahrzeug, umfassend:
eine Radnabe (20) mit einem Wälznietbundabschnitt (21);
eine Lageranordnung (30) mit einem Innenringelement (31) und einem Außenringelement (32), wobei zwischen dem Innenringelement (31) und dem Außenringelement (32) zumindest ein Wälzkörper (33) gelagert ist;
ein Washerelement (40), **dadurch gekennzeichnet, dass** das Washerelement am Innendurchmesser des Wälznietbundabschnitts (21) und/oder am Außendurchmesser des Innenringelements (31) der Lageranordnung (30) angeordnet ist und wobei das Washerelement (40) am Außendurchmesser des Innenringelements (31) der Lageranordnung (30) mittels Presspassung angeordnet ist, wobei das Washerelement (40) vorzugsweise mit einem Encoder-Element der Radlageranordnung (10) angeordnet bzw. kombiniert ist.

8. Radlageranordnung (10) für ein Fahrzeug, umfassend:
eine Radnabe (20) mit einem Wälznietbundabschnitt (21);
eine Lageranordnung (30) mit einem Innenringelement (31) und einem Außenringelement (32), wobei zwischen dem Innenringelement (31) und dem Außenringelement (32) zumindest ein Wälzkörper (33) gelagert ist;
ein Washerelement (40), **dadurch gekennzeichnet, dass** das Washerelement am Innendurchmesser des Wälznietbundabschnitts (21) und/oder am Außendurchmesser des Innenringelements (31) der Lageranordnung (30) angeordnet ist und wobei das Washerelement (40) am Innendurchmesser des Wälznietbundabschnitts (21) mittels zumindest eines Nasenelements angeordnet ist, wobei das Nasenelement vorzugsweise in einer am Innendurchmesser des Wälznietbundabschnitts (21) korrespondierend ausgebildeten Nut angeordnet ist, und wobei das Nasenelement und die korrespondierend ausgebildete Nut in Teilbereichen am Umfang des Washerelements (40) oder auch durchgehend am Umfang des Washerelements (40) vorgesehen ist.

9. Verwendung einer Radlageranordnung nach einem der Ansprüche 1 bis 8 in einem Fahrzeug, vorzugsweise in einem elektrisch angetriebenen Fahrzeug.

10. Fahrzeug, insbesondere ein elektrisch angetriebenes Fahrzeug, das vorzugsweise in einem Rekuperationsmodus betreibbar ist, umfassend zumindest eine Radlageranordnung nach einem der Ansprüche 1 bis 8.

## Claims

1. A wheel bearing assembly (10) for a vehicle, comprising:
a wheel hub (20) with a roller rivet collar section (21);
a bearing assembly (30) with an inner ring element (31) and an outer ring element (32), wherein at least one roll body (33) is mounted between the inner ring element (31) and the outer ring element (32);
a washer element (40), **characterized in that** the washer element is arranged on the inner diameter of the roller rivet collar section (21) and/or on the outer diameter of the inner ring element (31) of the bearing assembly (30), and wherein the washer element (40) is arranged on the inner diameter of the roller rivet collar section (21) by means of a press fit and/or on the inner diameter of the roller rivet collar section (21) by means of magnetization of the washer element (40).

2. The wheel bearing assembly (10) according to claim 1, wherein the washer element (40) comprises at least one lug portion (41) and is arranged with the latter on the inner diameter of the roller rivet collar section (21) by means of a press fit, wherein the lug portion (41) is provided in subregions on the circumference of the washer element (40) or continuously on the circumference of the washer element (40).

3. The wheel bearing assembly (10) according to any one of the preceding claims, wherein the washer element (40) is arranged on the inner diameter of the roller rivet collar section (21) by means of a press fit and an adhesive layer.

4. The wheel bearing assembly (10) according to any one of the preceding claims, wherein the washer element (40) is arranged on the inner diameter of the roller rivet collar by means of at least one locking or snap-in lug element, wherein the locking or snap-in lug element is preferably arranged in a groove correspondingly formed on the inner diameter of the roller rivet collar section (21), and wherein the locking or snap-in lug element and the correspondingly formed groove are provided in subregions on the circumference of the washer element (40) or continuously on the circumference of the washer element (40), wherein in the engagement region of the washer element (40) and the inner diameter of the roller rivet collar section (21) the respective surfaces of the washer element (40) and/or of the inner diameter of the roller rivet collar section (21) are preferably roughened, wherein the respective surfaces of the washer element (40) and/or of the inner diameter of the roller rivet collar section (21) are provided in subregions on their respective circumference or continuously over their respective circumference.

5. The wheel bearing assembly (10) according to any one of the preceding claims, wherein the washer element (40) is arranged on the inner diameter of the roller rivet collar section (21) by means of at least one O-ring element, wherein a groove is preferably formed on the inner diameter of the roller rivet collar section (21), in which groove the at least one O-ring element is arranged.

6. The wheel bearing assembly (10) according to any one of the preceding claims, wherein the washer element (40) comprises at least one rubberized surface and/or an engagement structure made of a rubber material and engages with said rubberized surface and/or engagement structure on the inner diameter of the roller rivet collar section (21) or on the outer diameter of the roller rivet collar section (21), wherein the rubberized surface and/or the engagement structure preferably comprises at least one surface structure, preferably at least one pointed structure, an undulating structure or a lug structure.

7. The wheel bearing assembly (10) for a vehicle, comprising:
a wheel hub (20) with a roller rivet collar section (21);
a bearing assembly (30) with an inner ring element (31) and an outer ring element (32), wherein at least one roll body (33) is mounted between the inner ring element (31) and the outer ring element (32);
a washer element (40), **characterized in that** the washer element is arranged on the inner diameter of the roller rivet collar section (21) and/or on the outer diameter of the inner ring element (31) of the bearing assembly (30) and wherein the washer element (40) is arranged on the outer diameter of the inner ring element (31) of the bearing assembly (30) by means of a press fit, wherein the washer element (40) is preferably arranged or combined with an encoder element of the wheel bearing assembly (10).

8. The wheel bearing assembly (10) for a vehicle, comprising:
a wheel hub (20) with a roller rivet collar section (21);
a bearing assembly (30) with an inner ring element (31) and an outer ring element (32), wherein at least one roll body (33) is mounted between the inner ring element (31) and the outer ring element (32);
a washer element (40), **characterized in that** the washer element is arranged on the inner diameter of the roller rivet collar section (21) and/or on the outer diameter of the inner ring element (31) of the bearing assembly (30), and wherein the washer element (40) is arranged on the inner diameter of the roller rivet collar section (21) by means of at least one lug element, wherein the lug element is preferably arranged in a groove correspondingly formed on the inner diameter of the roller rivet collar section (21), and wherein the nose element and the correspondingly formed groove are provided in subregions on the circumference of the washer element (40) or also continuously on the circumference of the washer element (40).

9. Use of a wheel bearing assembly according to any one of claims 1 to 8 in a vehicle, preferably in an electrically driven vehicle.

10. A vehicle, in particular an electrically driven vehicle, which is preferably operable in a recuperation mode, comprising at least one wheel bearing assembly according to any one of claims 1 to 8.

## Revendications

1. Ensemble roulement de roue (10) pour un véhicule, comprenant :
un moyeu de roue (20) comportant une section de collet de rivetage de roulement (21) ;
un ensemble roulement (30) comportant un élément bague intérieure (31) et un élément bague extérieure (32), dans lequel au moins un corps roulant (33) est monté entre l'élément bague intérieure (31) et l'élément bague extérieure (32) ;
un élément rondelle (40), **caractérisé en ce que** l'élément rondelle est agencé sur le diamètre intérieur de la section de collet de rivetage de roulement (21) et/ou sur le diamètre extérieur de l'élément bague intérieure (31) de l'ensemble roulement (30), et dans lequel l'élément rondelle (40) est agencé sur le diamètre intérieur de la section de collet de rivetage de roulement (21) par ajustement serré et/ou sur le diamètre intérieur de la section de collet de rivetage de roulement (21) par magnétisation de l'élément rondelle (40).

2. Ensemble roulement de roue (10) selon la revendication 1, dans lequel l'élément rondelle (40) comprend au moins une section de nez (41) et est agencé avec celle-ci sur le diamètre intérieur de la section de collet de rivetage de roulement (21) au moyen d'un ajustement serré, dans lequel la section de nez (41) est prévue dans des zones partielles sur la périphérie de l'élément rondelle (40) ou en continu sur la périphérie de l'élément rondelle (40).

3. Ensemble roulement de roue (10) selon l'une quelconque des revendications précédentes, dans lequel l'élément rondelle (40) est agencé sur le diamètre intérieur de la section de collet de rivetage de roulement (21) au moyen d'un ajustement serré et d'une couche adhésive.

4. Ensemble roulement de roue (10) selon l'une quelconque des revendications précédentes, dans lequel l'élément rondelle (40) est agencé sur le diamètre intérieur du collet de rivetage de roulement au moyen d'au moins un élément d'encliquetage ou d'enclenchement, dans lequel l'élément d'encliquetage ou d'enclenchement est de préférence agencé dans une rainure réalisée de manière correspondante sur le diamètre intérieur de la section de collet de rivetage de roulement (21) et dans lequel l'élément d'encliquetage ou d'enclenchement et la rainure réalisée de manière correspondante sont prévus dans des zones partielles sur la périphérie de l'élément rondelle (40) ou en continu sur la périphérie de l'élément rondelle (40), dans lequel, dans la zone de mise en prise de l'élément rondelle (40) et du diamètre intérieur de la section de collet de rivetage de roulement (21), les surfaces respectives de l'élément rondelle (40) et/ou du diamètre intérieur de la section de collet de rivetage de roulement (21) sont de préférence rendues rugueuses, dans lequel les surfaces respectives de l'élément rondelle (40) et/ou du diamètre intérieur de la section de collet de rivetage de roulement (21) sont prévues dans des zones partielles sur leur périphérie respective ou en continu sur leur périphérie respective.

5. Ensemble roulement de roue (10) selon l'une quelconque des revendications précédentes, dans lequel l'élément rondelle (40) est agencé sur le diamètre intérieur de la section de collet de rivetage de roulement (21) au moyen d'au moins un élément de joint torique, dans lequel une rainure est de préférence réalisée sur le diamètre intérieur de la section de collet de rivetage de roulement (21), dans laquelle est agencé l'au moins un élément de joint torique.

6. Ensemble roulement de roue (10) selon l'une quelconque des revendications précédentes, dans lequel l'élément rondelle (40) comprend au moins une surface caoutchoutée et/ou une structure de mise en prise en caoutchouc et est en prise avec ladite surface caoutchoutée et/ou ladite structure de mise en prise au niveau du diamètre intérieur de la section de collet de rivetage de roulement (21) ou au niveau du diamètre extérieur de la section de collet de rivetage de roulement (21), dans lequel la surface caoutchoutée et/ou la structure de mise en prise comprennent de préférence au moins une structure de surface, de préférence au moins une structure en pointe, une structure ondulée ou une structure de nez.

7. Ensemble roulement de roue (10) pour un véhicule, comprenant :
un moyeu de roue (20) comportant une section de collet de rivetage de roulement (21) ;
un ensemble roulement (30) comportant un élément bague intérieure (31) et un élément bague extérieure (32), dans lequel au moins un corps roulant (33) est monté entre l'élément bague intérieure (31) et l'élément bague extérieure (32) ;
un élément rondelle (40), **caractérisé en ce que** l'élément rondelle est agencé sur le diamètre intérieur de la section de collet de rivetage de roulement (21) et/ou sur le diamètre extérieur de l'élément bague intérieure (31) de l'ensemble roulement (30) et dans lequel l'élément rondelle (40) est agencé sur le diamètre extérieur de l'élément bague intérieure (31) de l'ensemble roulement (30) au moyen d'un ajustement serré, dans lequel l'élément rondelle (40) est agencé ou combiné de préférence avec un élément codeur de l'ensemble roulement de roue (10).

8. Ensemble roulement de roue (10) pour un véhicule, comprenant :
un moyeu de roue (20) comportant une section de collet de rivetage de roulement (21) ;
un ensemble roulement (30) comportant un élément bague intérieure (31) et un élément bague extérieure (32), dans lequel au moins un corps roulant (33) est monté entre l'élément bague intérieure (31) et l'élément bague extérieure (32) ;
un élément rondelle (40), **caractérisé en ce que** l'élément rondelle est agencé sur le diamètre intérieur de la section de collet de rivetage de roulement (21) et/ou sur le diamètre extérieur de l'élément bague intérieure (31) de l'ensemble roulement (30) et dans lequel l'élément rondelle (40) est agencé sur le diamètre intérieur de la section de collet de rivetage de roulement (21) au moyen d'au moins un élément nez, dans lequel l'élément nez est de préférence agencé dans une rainure réalisée de manière correspondante sur le diamètre intérieur de la section de collet de rivetage de roulement (21), et dans lequel l'élément nez et la rainure réalisée de manière correspondante sont prévus dans des zones partielles sur la périphérie de l'élément rondelle (40) ou également en continu sur la périphérie de l'élément rondelle (40).

9. Utilisation d'un ensemble roulement de roue selon l'une quelconque des revendications 1 à 8 dans un véhicule, de préférence dans un véhicule à entraînement électrique.

10. Véhicule, en particulier véhicule à entraînement électrique, qui peut de préférence fonctionner en mode de récupération, comprenant au moins un ensemble roulement de roue selon l'une quelconque des revendications 1 à 8.
